(19) **Europäisches Patentamt European Patent Office Office européen des brevets**

(11) **EP 4 526 167 B1**

(12) **FASCICULE DE BREVET EUROPÉEN**

(45) Date de publication et mention de la délivrance du brevet:
**11.03.2026 Bulletin 2026/11**

(21) Numéro de dépôt: **23722922.4**

(22) Date de dépôt: **07.04.2023**

(51) Classification Internationale des Brevets (IPC):
**B60W 30/14** *(2006.01)* **B60W 30/18** *(2012.01)*

(52) Classification Coopérative des Brevets (CPC):
**B60W 30/143; B60W 30/18154;** B60W 2520/10;
B60W 2554/802; B60W 2555/60; B60W 2720/103

(86) Numéro de dépôt international:
**PCT/FR2023/050510**

(87) Numéro de publication internationale:
**WO 2023/222960 (23.11.2023 Gazette 2023/47)**

(54) **PROCÉDÉ ET DISPOSITIF DE CONTRÔLE D'UN SYSTÈME DE RÉGULATION DE VITESSE D'UN VÉHICULE EN APPROCHE D'UN ÉLÉMENT DE SIGNALISATION ROUTIÈRE**

VERFAHREN UND VORRICHTUNG ZUR STEUERUNG EINES FAHRGESCHWINDIGKEITSREGELSYSTEMS EINES SICH EINEM VERKEHRSSIGNALGEBER NÄHERNDEN FAHRZEUGS

METHOD AND DEVICE FOR CONTROLLING A CRUISE CONTROL SYSTEM OF A VEHICLE APPROACHING A ROAD SIGNALLING ELEMENT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **20.05.2022 FR 2204821**

(43) Date de publication de la demande:
**26.03.2025 Bulletin 2025/13**

(73) Titulaire: **Stellantis Auto SAS 78300 Poissy (FR)**

(72) Inventeurs:
• **BRACONNIER, Jean-baptiste 91120 PALAISEAU (FR)**
• **GRAU, Thomas 75015 PARIS 15 (FR)**
• **ETCHEVERRY, Celine 91370 VERRIERES LE BUISSON (FR)**
• **MAHTOUT, Imane 75012 PARIS 12 (FR)**
• **VANPOPERINGHE, Elodie 92100 BOULOGNE BILLANCOURT (FR)**

(74) Mandataire: **ESIP Stellantis Auto SAS Service REIP - YT800 43, rue Jean Pierre Timbaud 78300 Poissy (FR)**

(56) Documents cités:
**EP-A1- 2 902 278 WO-A1-2021/121924**

## Description

### Domaine technique

La présente invention concerne les procédés et dispositifs de contrôle d'un système de régulation de vitesse d'un véhicule, notamment un véhicule automobile. La présente invention concerne également un procédé et un dispositif de contrôle de l'accélération et/ou de la vitesse d'un véhicule. La présente invention concerne également un procédé et un dispositif de contrôle d'un véhicule, notamment un véhicule autonome.

### Arrière-plan technologique

Certains véhicules contemporains sont équipés de fonctions ou système(s) ou d'aide à la conduite, dit ADAS (de l'anglais « Advanced Driver-Assistance System » ou en français « Système d'aide à la conduite avancé »).

Parmi ces systèmes, le système de régulation de vitesse ou le système de régulation adaptative de vitesse, dit ACC (de l'anglais « Adaptive Cruise Control ») a pour fonction première la régulation automatiquement (de façon adaptative pour le système ACC) de la vitesse des véhicules qui en sont équipés en fonction de leur environnement.

Le système de régulation de vitesse détermine une ou plusieurs consignes d'accélération pour atteindre une vitesse de consigne, par exemple réglée par le conducteur du véhicule.

Le système ACC détermine une ou plusieurs consignes d'accélération en fonction d'une consigne de vitesse et d'informations relatives à l'environnement du véhicule, la ou les consignes d'accélération étant propres à réguler la vitesse du véhicule de façon adaptative, c'est-à-dire en tenant compte de l'environnement du véhicule.

Ces informations d'environnement correspondent par exemple à la distance entre le véhicule équipé du système ACC et un véhicule circulant devant, à la vitesse (par exemple relative) du véhicule circulant devant, à l'accélération du véhicule circulant devant et/ou à une vitesse limite réglementaire.

Selon un autre exemple, ces informations d'environnement correspondent à des informations relatives à des éléments de signalisation routière, par exemple des panneaux de signalisation et/ou des feux de signalisation. Ces informations correspondent par exemple aux états pris par un feu (état correspondant à un feu rouge ou état correspondant à un feu vert) et sont par exemple reçues par le véhicule depuis le feu ou une infrastructure réseau via une connexion sans fil, ces objets (le véhicule et le feu de signalisation) étant dits connectés. À cet effet, il est référé à WO 2021/121924 A1 et EP 2 902 278 A1.

La gestion des éléments de signalisation pour le contrôle d'un système de régulation de vitesse requiert la présence d'une infrastructure réseau sans fil et de dispositifs de communication intégrés aux éléments de signalisation et aux véhicules. De tels éléments sont couteux, ce qui engendre notamment des surcouts de fabrication des véhicules.

Par ailleurs, toutes les situations de vie rencontrées par un véhicule ne sont pas prévues ou gérées par les systèmes existants, ce qui peut engendrer des problèmes de sécurité pour le véhicule et ses passagers.

### Résumé de la présente invention

Un objet de la présente invention est de résoudre au moins l'un des problèmes de l'arrière-plan technologique décrit précédemment.

Un autre objet de la présente invention est d'améliorer le contrôle d'un système de régulation de vitesse embarqué dans un véhicule.

Selon un premier aspect, la présente invention concerne un procédé de contrôle d'un système de régulation de vitesse d'un véhicule, selon la revendication 1, le véhicule circulant sur une portion de route en approche d'un élément de signalisation, le procédé comprenant les étapes suivantes :

- détection de l'élément de signalisation à un premier instant temporel ;

- détermination d'un premier intervalle temporel associé à une première phase d'un profil de régulation de vitesse du véhicule, d'un deuxième intervalle temporel associé à une deuxième phase du profil, la deuxième phase suivant temporellement la première phase, et

détermination d'une vitesse cible du véhicule en fonction de l'élément de signalisation détecté, la vitesse cible étant associée à une troisième phase du profil, la troisième phase suivant temporellement la deuxième phase, la troisième phase ayant une durée déterminée, un début du premier intervalle temporel étant déterminé en fonction d'un résultat d'une comparaison entre une première valeur de décélération cible associée à la première phase et une valeur courante de décélération déterminée en fonction d'une vitesse courante du véhicule, de la vitesse cible, d'une distance courante entre le véhicule et l'élément de signalisation et de la durée déterminée de la troisième phase, et un début du deuxième intervalle temporel étant déterminé en fonction d'un résultat d'une comparaison entre une deuxième valeur de décélération cible associée à la deuxième phase et la valeur courante de décélération, la deuxième valeur de décélération cible étant inférieure ou égale à la première valeur de décélération cible ;

- contrôle du système de régulation de vitesse selon le profil de régulation de vitesse, la première valeur de décélération cible, la deuxième valeur de décélération cible et la vitesse cible étant fournies au système de régulation de vitesse pour contrôler ce dernier pendant, respectivement, la première phase, la deuxième phase et la troisième phase.

Un tel procédé permet d'améliorer le contrôle du système de régulation de vitesse du véhicule en déterminant un profil de régulation comprenant une ou plusieurs phases de décélération suivie d'une phase à vitesse constante, laquelle dépend de l'élément de signalisation détecté. Un tel procédé ne nécessite que des moyens configurés pour détecter l'élément de signalisation (par exemple une caméra embarquée et/ou des informations de cartographies routière) ainsi que la distance entre le véhicule et cet élément de signalisation, sans avoir besoin de recevoir de données depuis l'élément de signalisation.

La ou les phases de décélérations reproduisent une approche classique d'un conducteur arrivant en approche d'un élément de signalisation, la vitesse cible associée à la dernière phase étant par exemple prévue pour laisser l'opportunité au conducteur d'agir manuellement sur le contrôle du véhicule en cas de besoin, ce qui permet d'augmenter la sécurité du véhicule et de ses passagers.

Selon une variante, le début du premier intervalle temporel est égal à un deuxième instant temporel correspondant à, lorsque le véhicule est à une distance inférieure à une distance déterminée de l'élément de signalisation, l'instant temporel auquel la valeur courante de décélération atteint la première valeur de décélération cible, et le début du deuxième intervalle temporel est égal à un troisième instant temporel correspondant à l'instant temporel auquel la valeur courante de décélération atteint la deuxième valeur de décélération cible.

Selon une autre variante, la valeur courante de décélération, notée $d_n$, est déterminée selon l'équation suivante :

$$d_n = (V_{cible}^2 - V^2) / (2 * (D - X * V_{cible}))$$

avec $V_{cible}$ correspondant à ladite vitesse cible, V correspondant à la vitesse courante dudit véhicule, D correspondant à la distance courante entre le véhicule et l'élément de signalisation et X correspondant à la durée déterminée de la troisième phase.

Selon une variante supplémentaire, l'élément de signalisation appartient à un ensemble d'éléments de signalisation comprenant :

- un panneau STOP ;
- un panneau CEDEZ LE PASSAGE ;
- un feu de signalisation au rouge ; et
- un feu de signalisation au vert.

Selon encore une variante, la vitesse cible vaut 25 km/h lorsque l'élément de signalisation correspond au panneau CEDEZ LE PASSAGE, la vitesse cible vaut 30 km/h lorsque l'élément de signalisation correspond au panneau STOP ou au feu de signalisation au rouge et la vitesse cible vaut 50 km/h lorsque l'élément de signalisation correspond au feu de signalisation au vert.

Selon une variante additionnelle, la durée déterminée de la troisième phase vaut 5 secondes, la première valeur de décélération cible vaut -0.3 m.s$^{-2}$ et la deuxième valeur de décélération cible vaut -0.7 m.s$^{-2}$ ou -1.2 m.s$^{-2}$.

Selon une variante supplémentaire, le profil comprend en outre une quatrième phase comprise entre la deuxième phase et la troisième phase lorsqu'une vitesse du véhicule atteint une valeur inférieure à la vitesse cible avant le début de la troisième phase, une valeur d'accélération étant associée à la quatrième phase, la valeur d'accélération étant déterminée de manière à ce qu'une vitesse du véhicule en fin de quatrième phase soit égale à la vitesse cible.

Selon un deuxième aspect, la présente invention concerne un dispositif de contrôle d'un système de régulation de vitesse d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

**Brève description des figures**

D'autres caractéristiques et avantages de la présente invention ressortiront de la description des exemples de réalisation particuliers et non limitatifs de la présente invention ci-après, en référence aux figures 1 à 4 annexées, sur lesquelles :

[Fig. 1] illustre schématiquement un environnement d'un véhicule, selon un exemple de réalisation particulier et non limitatif de la présente invention ;
[Fig. 2] illustre un diagramme représentant un profil de régulation de vitesse pour le contrôle d'un système de régulation de vitesse du véhicule de la figure 1, selon un exemple de réalisation particulier et non limitatif de la présente invention ;

[Fig. 3] illustre schématiquement un dispositif configuré pour contrôler un système de régulation de vitesse du véhicule de la figure 1, selon un exemple de réalisation particulier et non limitatif de la présente invention ;

[Fig. 4] illustre un organigramme des différentes étapes d'un procédé de contrôle d'un système de régulation de vitesse du véhicule de la figure 1, selon un exemple de réalisation particulier et non limitatif de la présente invention.

## Description des exemples de réalisation

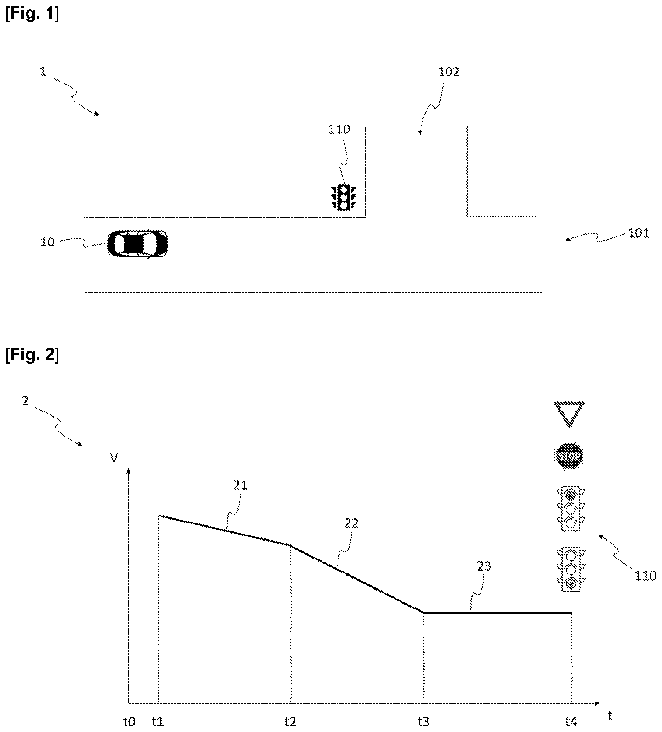

Un procédé et un dispositif de contrôle d'un système de régulation de vitesse d'un véhicule vont maintenant être décrits dans ce qui va suivre en référence conjointement aux figures 1 à 4. Des mêmes éléments sont identifiés avec des mêmes signes de référence tout au long de la description qui va suivre.

Selon un exemple particulier et non limitatif de réalisation de la présente invention, le contrôle d'un système de régulation de vitesse d'un véhicule, par exemple un système ACC, comprend la détection d'un élément de signalisation positionné sur le bord d'une route sur laquelle circule le véhicule. Un tel élément de signalisation correspond à un panneau de signalisation ou un feu de signalisation prévu pour réguler le passage des véhicules à un carrefour par exemple. Le système de régulation de vitesse du véhicule est avantageusement régulé selon un profil de régulation de vitesse comprenant une ou plusieurs phases de décélération (accélération négative du véhicule) suivie d'une phase d'approche de l'élément de signalisation (d'une durée déterminée) au cours de laquelle la vitesse est régulée pour être conforme à une vitesse cible qui est fonction de l'élément de signalisation détecté. La ou les phases de décélération sont chacune associée à un intervalle temporel d'une durée déterminée. La durée de chaque intervalle temporel est déterminée en déterminant le début de chaque intervalle temporel, lequel est fonction d'un résultat d'une comparaison entre une valeur de décélération cible associée à la phase de décélération considérée du profil et une valeur courante de décélération déterminée en fonction d'une vitesse courante du véhicule, de la vitesse cible, d'une distance courante entre le véhicule et l'élément de signalisation et de la durée de la phase d'approche.

La figure 1 illustre schématiquement un environnement 1 d'un véhicule 10, selon un exemple de réalisation particulier et non limitatif de la présente invention.

La figure 1 illustre un véhicule 10, par exemple un véhicule automobile, embarquant par exemple des moyens configurés pour détecter la présence d'un élément de signalisation 110 arrangé le long de la voie de circulation 101 empruntée par le véhicule 10, devant le véhicule 10 selon le sens de circulation du véhicule 10. Selon d'autres exemples, le véhicule 10 correspond à un car, un bus, un camion, un véhicule utilitaire ou une motocyclette, c'est-à-dire à un véhicule de type véhicule terrestre motorisé.

Le véhicule 10 correspond à un véhicule circulant sous la supervision totale d'un conducteur ou circulant dans un mode autonome ou semi-autonome. Le véhicule circule selon un niveau d'autonomie égale à 0 ou selon un niveau d'autonomie allant de 1 à 5 par exemple, selon l'échelle définie par l'agence fédérale américaine qui a établi 5 niveaux d'autonomie allant de 1 à 5, le niveau 0 correspondant à un véhicule n'ayant aucune autonomie, dont la conduite est sous la supervision totale du conducteur, le niveau 1 correspondant à un véhicule avec un niveau d'autonomie minimal, dont la conduite est sous la supervision du conducteur avec une assistance minimale d'un système ADAS, et le niveau 5 correspondant à un véhicule complètement autonome.

Selon l'exemple de la figure 1, le véhicule 10 circule sur une portion de route comprenant une première voie de circulation 101 sur laquelle circule le véhicule 10. La première voie de circulation 101 croise une deuxième voie de circulation, le passage au niveau du carrefour entre ces deux voies de circulation étant régulé par l'élément de signalisation 110.

L'environnement du véhicule 10 ne se limite pas à l'exemple de la figure 1 mais s'étend à tout environnement routier comprenant une route sur laquelle circule le véhicule 10 dont le passage ou le franchissement d'une portion est régulé par un élément de signalisation. Une telle portion correspond par exemple à un carrefour, un croisement de routes, un rond-point, un passage à niveau, etc.

L'élément de signalisation 110 correspond par exemple à l'un des éléments suivants :

- un panneau STOP requérant un arrêt du véhicule 10 ;
- un panneau CEDEZ LE PASSAGE requérant un arrêt du véhicule si nécessaire ;
- un feu de signalisation tricolore prenant un premier état correspondant au feu vert (passage du feu autorisé pour le véhicule 10) et un deuxième état correspondant au feu rouge (arrêt requis pour le véhicule 10).

Le véhicule 10 embarque par exemple un ou plusieurs des moyens de détection de l'élément de signalisation suivants :

- une ou plusieurs caméras (associées ou non à un capteur de profondeur) pour l'acquisition d'une ou plusieurs images de l'environnement autour du véhicule 10 se trouvant dans le champ de vision de la ou les caméras ; et/ou
- un système de navigation et/ou un système de géolocalisation comprenant des informations de cartographies routières de l'environnement routier dans lequel circule le véhicule 10, les informations de cartographies comprenant des informations sur la présence et la position des éléments de signalisation.

Selon une variante de réalisation, le véhicule 10 embarque en outre un ou plusieurs des dispositifs ou systèmes suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets (par exemple un véhicule circulant devant le véhicule 10 ou l'élément de signalisation 110), dans le but de détecter des obstacles et leurs distances vis-à-vis du véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets (par exemple un véhicule circulant devant le véhicule 10 ou l'élément de signalisation 110) situés dans le faisceau lumineux émis et de mesurer la distance entre le capteur et chaque objet détecté ; et/ou
- un récepteur d'un système de géolocalisation par satellite configuré pour déterminer la position courante du véhicule 10, par exemple un système de type GPS (de l'anglais « Global Positioning System » ou en français « Système mondial de positionnement ») ou Galileo ; la position courante est par exemple exprimée sous la forme de coordonnées, par exemple sous la forme d'un couple latitude/longitude.

Les données acquises par le ou les capteurs embarqués alimentent par exemple un ou plusieurs systèmes d'aide à la conduite, dit ADAS (de l'anglais « Advanced Driver-Assistance System » ou en français « Système d'aide à la conduite avancé ») embarqués dans le véhicule 10. Un tel système ADAS est configuré pour assister, voire remplacer, le conducteur du véhicule 10 pour contrôler le véhicule 10 sur son parcours.

Selon un premier exemple, le véhicule 10 embarque un système ADAS correspondant à un système de régulation automatique de la vitesse, dit système CC (de l'anglais « Cruise Control »). Un tel système est destiné à stabiliser automatiquement la vitesse du véhicule autour d'une vitesse de consigne fixée par le conducteur du véhicule 10, par exemple via une manette de contrôle arrangée près du volant, sans que le conducteur n'ait à appuyer sur la pédale d'accélérateur. Le système CC gère la vitesse en déterminant ou calculant des valeurs d'accélération de consigne évoluant au cours du temps en fonction de la vitesse courante du véhicule (par exemple obtenue d'un capteur de vitesse embarqué dans le véhicule 10, par exemple un odomètre) et en fonction de la vitesse de consigne. Ainsi, les données obtenues du ou des capteurs de vitesse embarqués dans le véhicule 10 permettent au système CC du véhicule 10 d'établir une consigne d'accélération longitudinale $A_{consigne}(t)$.

Selon un deuxième exemple, le véhicule 10 embarque un système ADAS correspondant à un système de régulation adaptative de la vitesse, dit système ACC. Lorsque le système ACC est activé, le système ACC a pour objectif de réaliser une accélération de consigne, appelée $A_{consigne}(t)$, qui varie au cours du temps 't' et qui permet de maintenir ou atteindre une vitesse de régulation. Le système ACC ou un calculateur de ce système transmet par exemple les consignes d'accélérations $A_{consigne}(t)$ qu'il a déterminé au(x) calculateur(s) supervisant le fonctionnement d'un groupe motopropulseur du véhicule 10, notamment pour que ce(s) dernier(s) détermine(nt) les consignes de couple à générer par le groupe motopropulseur pour respecter les consignes d'accélération $A_{consigne}(t)$ et réguler la vitesse longitudinale du véhicule 10.

Selon un troisième exemple, le véhicule 10 embarque à la fois un système CC et un système ACC ou un seul et même système embarqué dans le véhicule 10 met en œuvre la fonction CC et la fonction ACC.

Un processus de contrôle d'un système de régulation de vitesse, par exemple un système ACC, du véhicule 10 est avantageusement mis en œuvre par le véhicule 10, c'est-à-dire par un calculateur ou une combinaison de calculateurs du système embarqué du véhicule 10, par exemple par le ou les calculateurs en charge de contrôler le système ACC.

La contrôle du système de régulation de vitesse selon la présence invention est basé sur un profil de régulation de vitesse déterminé, un tel profil comprenant avantageusement une ou plusieurs phases successives de décélération (avec pour chacune de ces phases une accélération de consigne négative déterminée, une accélération négative correspondant à une décélération) suivie(s) d'une phase à vitesse constante. Le système de régulation de vitesse est ainsi contrôlé en fonction de valeurs de décélération de consigne chacune associée à une phase de décélération du profil et d'une vitesse de consigne associée à la dernière phase à vitesse constante.

Un exemple d'un tel profil de régulation de vitesse est illustré à la figure 2, selon un mode de réalisation particulier et non limitatif de la présente invention.

Le diagramme 2 de la figure 2 illustre un profil de la vitesse notée 'V' (en ordonnée du diagramme, exprimée en m/s) en fonction du temps noté 't' (exprimée en secondes, notées 's'). Selon une variante, le diagramme 2 illustre de manière équivalente la vitesse V en fonction de la distance (exprimée en m), la relation entre le temps 't' et la distance 'd' étant connue et fonction de la vitesse (et de l'accélération) du véhicule 10.

Selon l'exemple particulier de la figure 2, le profil de régulation de la vitesse comprend 3 phases, à savoir :

- une première phase de décélération 21, une première valeur de décélération cible, note $d_{phase1}$ étant associée à cette première phase 21 et étant par exemple égale à -0.3 m.s$^{-2}$ (selon d'autres exemples $d_{phase1}$ vaut -0.2, -0.4 ou -0.5 m.s$^{-2}$) ; $d_{phase1}$ correspond à la valeur d'accélération de consigne fournie au système de régulation de vitesse pour contrôler ce dernier pendant la première phase de décélération 21 ; la première phase de décélération débute à un instant t1 (postérieur à un instant t0 correspondant à l'instant de détection de l'élément de signalisation 210) et finit à un instant t2, le premier intervalle temporel compris entre t1 et t2 étant associé à la première phase de décélération 21 et correspondant à la durée de la première phase de décélération 21 ;

- une deuxième phase de décélération 22, une deuxième valeur de décélération cible, note $d_{phase2}$ étant associée à cette deuxième phase 22 et étant par exemple égale à -0.7 m.s$^{-2}$ ou -1.2 m.s$^{-2}$ (selon d'autres exemples $d_{phase2}$ prend toute valeur comprise entre - 0.7 et -1.2 m.s$^{-2}$) ; $d_{phase2}$ correspond à la valeur d'accélération de consigne fournie au système de régulation de vitesse pour contrôler ce dernier pendant la deuxième phase de décélération 22 ; la deuxième phase de décélération 22 débute à l'instant t2 et finit à un instant t3, le deuxième intervalle temporel compris entre t2 et t3 étant associé à la deuxième phase de décélération 22 et correspondant à la durée de la deuxième phase de décélération 22 ; et

- une troisième phase 23, une valeur de vitesse constante appelée vitesse cible $V_{cible}$ étant associée à cette troisième phase et étant fonction du type de l'élément de signalisation 210 détecté ; $V_{cible}$ correspond à la vitesse de consigne fournie au système de régulation de vitesse pour contrôler ce dernier pendant la troisième phase 23 ; la troisième phase 23 débute à l'instant t3 et finit à l'instant t4, t4 correspondant à l'instant auquel le véhicule 10 atteint l'élément de signalisation 210 ; le troisième intervalle temporel associé à la troisième phase et compris entre t3 et t4 possède une durée déterminée, notée 'X', X étant par exemple égale à 5 s (selon d'autres exemples, X vaut 4, 6, 8 ou 10 s) ; X correspond par exemple à un paramètre du système de régulation de vitesse dont la valeur est modifiable, par exemple via une IHM (interface homme-machine) accessible par un utilisateur du véhicule 10.

Les opérations du processus de contrôle du système de régulation de vitesse du véhicule 10 décrites ci-dessous sont mises en œuvre séquentiellement ou simultanément. Par exemple, certaines des opérations décrites ci-dessous, même si décrites sous la forme d'opérations unitaires différentes, sont mises en œuvre en parallèle et peuvent former une seule et même opération.

Dans une première opération, l'élément de signalisation 210 est détecté par le véhicule 10 à un premier instant temporel t0.

L'élément de signalisation 210 correspond par exemple à un des 4 éléments suivants :

- un panneau STOP ;
- un panneau CEDEZ LE PASSAGE ;
- un feu de signalisation au rouge ; et
- un feu de signalisation au vert.

L'élément de signalisation 210 est par exemple détecté en appliquant un ou plusieurs procédés de traitement d'image à des données d'images de l'environnement du véhicule 10 reçues depuis une caméra embarquée dans le véhicule.

Une méthode de reconnaissance d'objet est par exemple appliquée aux données d'images reçues pour détecter la présence de l'élément de signalisation 210 et reconnaitre le type de l'élément de signalisation. La méthode de traitement d'image mise en œuvre correspond par exemple à une méthode dite d'apprentissage automatique ou d'apprentissage machine (de l'anglais « machine learning »), par exemple mise en œuvre par un réseau de neurones.

La distance séparant le véhicule 10 de l'élément de signalisation 210 à l'instant t0 est par exemple déterminée à partir des données d'image reçues. Selon une variante, cette distance est déterminée à partir de données reçues d'un capteur de détection d'objet (par exemple un radar ou un LIDAR) embarqué dans le véhicule 10.

Selon un autre exemple, l'élément de signalisation 210 et la distance séparant cet élément 210 du véhicule 10 à l'instant de détection sont déterminées à partir de données de cartographies accessibles par le véhicule 10, ces données étant par exemple stockées dans une mémoire du véhicule 10. Ces données de cartographies correspondent par exemple à des données de cartes d'un système de navigation du véhicule 10, la détection de l'élément 210 et la détermination de la distance étant obtenues en connaissant la position géographique du véhicule 10 (obtenue par exemple via un système de géolocalisation de type GPS).

Dans une deuxième opération, la vitesse cible $V_{cible}$ associée à la troisième phase 23 du profil de régulation de vitesse est déterminée en fonction du type de l'élément de signalisation détectée.

Par exemple, la vitesse cible $V_{cible}$ vaut 25 km/h (soit environ 7 m.s$^{-1}$) lorsque l'élément de signalisation 210 correspond au panneau CEDEZ LE PASSAGE, la vitesse cible vaut 30 km/h (soit environ 8.3 m.s$^{-1}$) lorsque l'élément de signalisation correspond au panneau STOP ou au feu de signalisation au rouge et la vitesse cible vaut 50 km/h (soit environ 14 m.s$^{-1}$) lorsque l'élément de signalisation correspond au feu de signalisation au vert.

Bien entendu, ces valeurs de vitesses sont données à titre d'exemple et ne sont pas limitatives. Selon d'autres exemples, $V_{cible}$ vaut 20 ou 30 km/h pour un panneau CEDEZ LE PASSAGE, $V_{cible}$ vaut 35 ou 40 km/h pour un panneau STOP ou un feu de signalisation au rouge et $V_{cible}$ vaut 40 ou 45 km/h pour feu de signalisation au vert.

La valeur cible est par exemple sélectionnée dans une table de correspondance, dite LUT (de l'anglais « Look-Up Table ») stockée dans une mémoire accessible par le calculateur mettant en œuvre le processus, une telle LUT mettant en correspondance une valeur de $V_{cible}$ pour chaque type d'élément de signalisation.

Dans une troisième opération, le premier intervalle temporel associé à la première phase 21 du profil de régulation de vitesse du véhicule et le deuxième intervalle temporel associé à la deuxième phase 22 du profil sont déterminés.

A cet effet, l'instant temporel t1 correspondant au début de la première phase 21 et l'instant temporel t2 correspondant au début de la deuxième phase 22 sont déterminés. L'instant temporel t3 correspondant à la fin du deuxième intervalle temporel est déterminé à partir de la valeur X de la durée de la troisième phase qui correspond à un paramètre déterminé du système, par exemple égal à 5 s. Ce paramètre correspond par exemple à une distance fixée par rapport à l'emplacement de l'élément de signalisation 210 détecté. Cette distance correspond par exemple au paramètre du système stocké en mémoire, la valeur de X étant déduite de cette distance une fois que $V_{cible}$ a été déterminée.

L'instant temporel t1 est par exemple déterminé en comparant la première valeur de décélération cible $d_{phase1}$ associée à la première phase 21 et une valeur courante de décélération, notée '$d_n$', déterminée en fonction d'une vitesse courante, notée 'V', du véhicule, de la vitesse cible $V_{cible}$, d'une distance courante, notée 'D', entre le véhicule 10 et l'élément de signalisation 210 et de la durée X déterminée de la troisième phase.

Ainsi, une fois l'élément de signalisation 210 détecté, $d_n$ est calculée au fur et à mesure du déplacement du véhicule 10, par exemple à intervalles réguliers (par exemple toutes les 10, 20, 50 ou 100 ms), et comparée à $d_{phase1}$.

La valeur courante de décélération $d_n$ est par exemple obtenue à partir de l'équation suivante :

[Math 1]

$$d_n = \frac{V_{cible}^2 - V^2}{2 * (D - X * V_{cible})}$$

Une valeur est dite courante lorsqu'elle est déterminée à un instant courant. Lorsque $d_n$ est déterminée à intervalles régulier, la valeur courante de $d_n$ correspond à la valeur de $d_n$ à l'instant auquel elle est calculée, la vitesse courante du véhicule utilisée pour calculer $d_n$ correspondant à la valeur de la vitesse du véhicule à l'instant auquel $d_n$ est calculée.

Lorsque l'élément de signalisation 210 est détecté à t0, le calcul de $d_n$ est déclenché. Selon une variante, le calcul de dn est déclenché à condition que la distance séparant le véhicule 10 de l'élément de signalisation soit inférieure à une distance seuil, par exemple inférieure à 160 m, ou, selon d'autres exemples, inférieure à 250, 200 ou 150 m. Selon une variante, cette distance seuil dépend de la vitesse du véhicule 10 à l'instant t0 de détection de l'élément 210 et de la vitesse cible $V_{cible}$ déterminée.

Le début t1 du premier intervalle temporel est ainsi par exemple déterminé lorsque les 2 conditions suivantes sont remplies :

- la distance entre le véhicule 10 et l'élément 210 est inférieure à la distance seuil ;
- $d_{phase1} \geq d_n$.

Dit autrement, t1 correspond à l'instant temporel auquel $d_n$ atteint $d_{phase1}$, à condition qu'à t1 la distance entre le véhicule 10 et l'élément 210 soit inférieure à la distance seuil.

Selon l'équation de dn ci-dessus, en considérant que la vitesse courante du véhicule 10 est constante (c'est-à-dire avec des variations autour d'une vitesse moyenne inférieure à un seuil, par exemple inférieures à 2 ou 5 % de la vitesse moyenne) à partir de t0, la valeur de dn va diminuer (en considérant que $V_{cible}$ est inférieure à la vitesse courante du véhicule 10) au fur et à mesure que le véhicule 10 s'approche de l'élément de signalisation 210.

En exprimant la décélération $d_n$ avec une valeur négative, alors la décélération $d_n$ diminue au fur et à mesure que la distance entre le véhicule 10 et l'élément 210 augmente. En exprimant la décélération $d_n$ avec une valeur positive (ce qui équivaut à utiliser une notion d'accélération négative pour définir la décélération), alors la décélération $d_n$ augmente au fur et à mesure que la distance entre le véhicule 10 et l'élément 210 augmente.

Dans le reste de la description, la décélération est exprimée avec une valeur négative, cette valeur diminuant au fur et à mesure que la décélération augmente.

Lorsque la première phase 21 commence (à t1), la première valeur de décélération cible $d_{phase1}$ devient l'accélération de consigne fournie au système de régulation de vitesse du véhicule 10, par exemple le système ACC. La vitesse du véhicule 10 décroit alors sur cette première phase selon la première valeur de décélération cible $d_{phase1}$.

Le début t2 de la deuxième phase 22 (qui correspond à la fin de la première phase) est déterminé en comparant la deuxième valeur de décélération cible $d_{phase2}$ associée à la deuxième phase 22 à dn qui est par exemple calculée selon l'équation ci-dessus.

t2 correspond ainsi par exemple à l'instant temporel auquel $d_n$ atteint $d_{phase2}$, c'est à dire lorsque la condition suivante est remplie : $d_{phase2} \geq d_n$.

Un profil de régulation de vitesse selon l'exemple de la figure 2 avec une première phase de décélération douce suivie d'une deuxième phase de décélération plus forte (c'est-à-dire avec une première valeur de décélération cible $d_{phase1}$, qui est par exemple égale à -0.3 $m.s^{-2}$, supérieure à la première valeur de décélération cible $d_{phase2}$, qui est par exemple égale à -0.7 $m.s^{-2}$) présente plusieurs avantages, à savoir :

- la première phase de décélération 21 permet d'alerter le conducteur du véhicule 10 qu'un élément de signalisation 210 a été détecté, avec une décélération faible ou douce ;

- la deuxième phase de décélération 22 avec une décélération plus importante ou plus marquée permet d'atteindre la vitesse cible $V_{cible}$ de la troisième phase plus rapidement et permet également de faire ressentir au conducteur la différence avec la troisième phase 23 pendant laquelle la vitesse du véhicule 10 sera maintenue et régulée autour de $V_{cible}$ ; et

- la troisième phase 23 avec une durée déterminée (ou une distance de parcours déterminée) et avec une vitesse cible adaptée à l'élément de signalisation 210 détecté laisse l'opportunité au conducteur de reprendre le contrôle total du véhicule 10 si besoin, en désactivant le système de régulation de vitesse. Par exemple, si l'élément de signalisation 210 correspondait à un feu vert à t0 et qu'il passe au rouge durant la troisième phase 23, le conducteur doit prendre le contrôle du véhicule pour stopper le véhicule 10 et marquer l'arrêt au feu rouge. Selon un autre exemple, dans le cas d'un panneau CEDEZ LE PASSAGE, si un véhicule arrive sur la route 102, le véhicule 10 doit marquer l'arrêt au panneau. De la même manière, dans le cas d'un panneau STOP ou d'un feu rouge, une vitesse cible modérée ou faible laisse le temps au conducteur de reprendre le contrôle du véhicule 10 pendant la troisième phase 23 pour stopper le véhicule 10 et marquer l'arrêt au panneau ou au feu ; si le feu rouge repasse au vert pendant la troisième phase 23, ou pendant l'une des phases de décélération, le conducteur peut alors décider de laisser le système de régulation de vitesse réguler l'allure du véhicule 10 jusqu'au passage de l'élément de signalisation 210.

Dans d'autres modes de réalisation particuliers qui ne correspondent pas à proprement parler à l'invention revendiquée, le nombre de phases de décélération 21, 22 peut varier selon la vitesse du véhicule 10 à l'instant t0 de détection de l'élément de signalisation 210.

Par exemple, lorsque la vitesse du véhicule 10 est inférieure à un seuil à l'instant t0, le profil ne comprend qu'une seule phase de décélération, c'est-à-dire que la première phase 21 et la deuxième phase 22 ne forment qu'une seule phase avec une même valeur de décélération cible qui correspond par exemple à la première valeur de décélération cible $d_{phase1}$ ou à une autre valeur. La valeur de décélération de cette unique phase dépend de la vitesse du véhicule à t0 et de la vitesse cible $V_{cible}$ fonction du type de l'élément de signalisation détecté.

Selon un autre exemple qui ne correspondent pas à proprement parler à l'invention revendiquée, lorsque la vitesse du véhicule 10 est supérieure à un seuil (par exemple supérieure à 90, 100 ou 110 km/h) à l'instant t0, le profil ne comprend qu'une seule phase de décélération, c'est-à-dire que la première phase 21 et la deuxième phase 22 ne forment qu'une seule phase avec une même valeur de décélération cible qui correspond par exemple à la deuxième valeur de décélération cible $d_{phase1}$ ou à une autre valeur par exemple inférieure à cette valeur (c'est-à-dire pour une décélération plus importante). La valeur de décélération de cette unique phase dépend de la vitesse du véhicule à t0 et de la vitesse cible $V_{cible}$ fonction du type de l'élément de signalisation détecté.

Selon un autre mode de réalisation particulier qui ne correspond pas à proprement parler à l'invention revendiquée, le profil comprend en outre une quatrième phase comprise entre la deuxième phase 22 et la troisième phase 23 lorsque la vitesse du véhicule 10 atteint avant la fin de la deuxième phase une valeur inférieure à la vitesse cible $V_{cible}$.

Selon ce mode de réalisation, une valeur d'accélération (valeur positive) est par exemple associée à la quatrième phase, la valeur d'accélération étant déterminée de manière à ce qu'une vitesse du véhicule en fin de quatrième phase soit égale à la vitesse cible $V_{cible}$.

Selon un autre mode de réalisation, lorsque la vitesse du véhicule 10 atteint à la fin de la deuxième phase 22, c'est-à-dire à l'instant t3, une vitesse ayant une valeur inférieure à la vitesse cible $V_{cible}$, la valeur de la vitesse associée à la troisième phase 23 devient cette vitesse de valeur inférieure à $V_{cible}$.

Dans une quatrième opération, le système de régulation de vitesse du véhicule 10 est contrôlé selon le profil de régulation de vitesse déterminé dans les opérations précédentes. Les valeurs d'accélération de consigne du système de régulation correspondent aux valeurs de décélération cibles $d_{phase1}$ et $d_{phase2}$ associées à chaque phase de décélération 21, 22 et la vitesse de consigne du système de régulation pour la troisième phase 23 à vitesse constante correspond à $V_{cible}$ (ou à la vitesse cible modifiée le cas échéant).

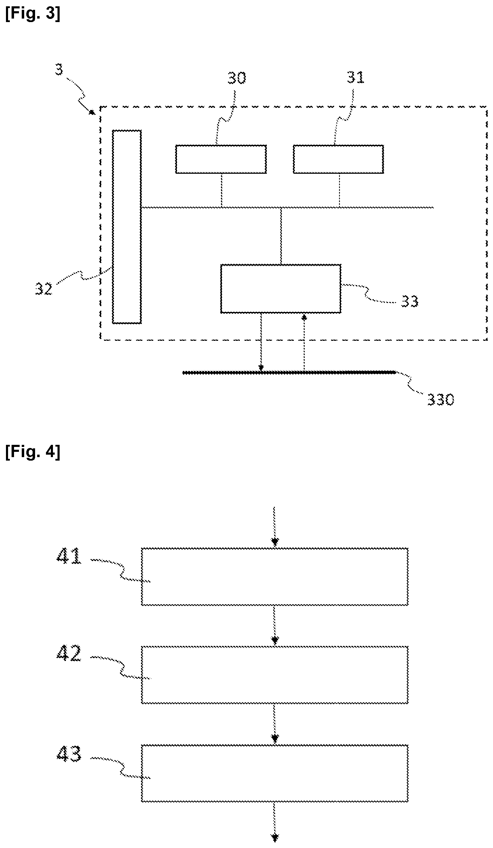

La figure 3 illustre schématiquement un dispositif 3 configuré pour contrôler un système de régulation de vitesse de véhicule, par exemple du véhicule 10, selon un exemple de réalisation particulier et non limitatif de la présente invention. Le dispositif 3 correspond par exemple à un dispositif embarqué dans le véhicule 10, par exemple un calculateur.

Le dispositif 3 est par exemple configuré pour la mise en œuvre des opérations décrites en regard des figures 1 et 2 et/ou des étapes du procédé décrit en regard de la figure 4. Des exemples d'un tel dispositif 3 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 3, individuellement ou en combinaison, peuvent être intégrés dans un unique circuit intégré, dans plusieurs circuits intégrés, et/ou dans des composants discrets. Le dispositif 3 peut être réalisé sous la forme de circuits électroniques ou de modules logiciels (ou informatiques) ou encore d'une combinaison de circuits électroniques et de modules logiciels.

Le dispositif 3 comprend un (ou plusieurs) processeur(s) 30 configurés pour exécuter des instructions pour la réalisation des étapes du procédé et/ou pour l'exécution des instructions du ou des logiciels embarqués dans le dispositif 3. Le processeur 30 peut inclure de la mémoire intégrée, une interface d'entrée/sortie, et différents circuits connus de l'homme du métier. Le dispositif 3 comprend en outre au moins une mémoire 31 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 31.

Selon différents exemples de réalisation particuliers et non limitatifs, le dispositif 3 est couplé en communication avec d'autres dispositifs ou systèmes similaires (par exemple d'autres calculateurs) et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif 3 comprend un bloc 32 d'éléments d'interface pour communiquer avec des dispositifs externes. Les éléments d'interface du bloc 32 comprennent une ou plusieurs des interfaces suivantes :

- interface radiofréquence RF, par exemple de type Wi-Fi® (selon IEEE 802.11), par exemple dans les bandes de fréquence à 2,4 ou 5 GHz, ou de type Bluetooth® (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;

- interface USB (de l'anglais « Universal Serial Bus » ou « Bus Universel en Série » en français) ;

- interface HDMI (de l'anglais « High Definition Multimedia Interface », ou « Interface Multimedia Haute Definition » en français) ;

- interface LIN (de l'anglais « Local Interconnect Network », ou en français « Réseau interconnecté local »).

Selon un autre exemple de réalisation particulier et non limitatif, le dispositif 3 comprend une interface de communication 33 qui permet d'établir une communication avec d'autres dispositifs (tels que d'autres calculateurs du système embarqué) via un canal de communication 330. L'interface de communication 33 correspond par exemple à un transmetteur configuré pour transmettre et recevoir des informations et/ou des données via le canal de communication 330. L'interface de communication 33 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif 3 peut fournir des signaux de sortie à un ou plusieurs dispositifs externes, tels qu'un écran d'affichage, tactile ou non, un ou des haut-parleurs et/ou d'autres périphériques (système de projection) via des interfaces de sortie respectives. Selon une variante, l'un ou l'autre des dispositifs externes est intégré au dispositif 3.

La figure 4 illustre un organigramme des différentes étapes d'un procédé de contrôle d'un système de régulation d'un véhicule, par exemple un système ACC du véhicule 10, selon un exemple de réalisation particulier et non limitatif de la présente invention. Le procédé est par exemple mis en œuvre par un dispositif embarqué dans le véhicule 10 ou par le dispositif 3 de la figure 3.

Dans une première étape 41, un élément de signalisation est détecté à un premier instant temporel.

Dans une deuxième étape 42, un premier intervalle temporel associé à une première phase d'un profil de régulation de vitesse du véhicule et un deuxième intervalle temporel associé à une deuxième phase du profil sont déterminés, la deuxième phase suivant temporellement la première phase.

Une vitesse cible du véhicule est en outre déterminée en fonction de l'élément de signalisation détecté, la vitesse cible étant associée à une troisième phase du profil, la troisième phase suivant temporellement la deuxième phase, la troisième phase ayant une durée déterminée.

Le début du premier intervalle temporel est déterminé en fonction d'un résultat d'une comparaison entre une première valeur de décélération cible associée à la première phase et une valeur courante de décélération déterminée en fonction d'une vitesse courante du véhicule, de la vitesse cible, d'une distance courante entre le véhicule et l'élément de signalisation et de la durée déterminée de la troisième phase.

Le début du deuxième intervalle temporel est déterminé en fonction d'un résultat d'une comparaison entre une deuxième valeur de décélération cible associée à la deuxième phase et la valeur courante de décélération, la deuxième valeur de décélération cible étant inférieure ou égale à la première valeur de décélération cible.

Dans une troisième étape 43, le système de régulation de vitesse est contrôlé selon le profil de régulation de vitesse déterminé à la deuxième opération.

Selon une variante, les variantes et exemples des opérations décrits en relation avec la figure 1 et/ou 2 s'appliquent aux étapes du procédé de la figure 4.

**Revendications**

1. Procédé de contrôle d'un système de régulation de vitesse d'un véhicule (10), ledit véhicule (10) circulant sur une portion de route (101) en approche d'un élément de signalisation (110), ledit procédé comprenant les étapes suivantes :

   - détection (41) dudit élément de signalisation à un premier instant temporel ;
   - détermination (42) d'un premier intervalle temporel associé à une première phase (21) d'un profil de régulation de vitesse dudit véhicule (10), d'un deuxième intervalle temporel associé à une deuxième phase (22) dudit profil, ladite deuxième phase (22) suivant temporellement ladite première phase (21), et

   détermination (42) d'une vitesse cible dudit véhicule (10) en fonction dudit élément de signalisation (110) détecté, ladite vitesse cible étant associée à une troisième phase (23) dudit profil, ladite troisième phase (23) suivant temporellement ladite deuxième phase (22), ladite troisième phase (23) ayant une durée déterminée,

un début dudit premier intervalle temporel étant déterminé en fonction d'un résultat d'une comparaison entre une première valeur de décélération cible associée à ladite première phase (21) et une valeur courante de décélération déterminée en fonction d'une vitesse courante dudit véhicule (10), de ladite vitesse cible, d'une distance courante entre ledit véhicule (10) et ledit élément de signalisation (110) et de ladite durée déterminée de la troisième phase (23), et

un début dudit deuxième intervalle temporel étant déterminé en fonction d'un résultat d'une comparaison entre une deuxième valeur de décélération cible associée à ladite deuxième phase (22) et ladite valeur courante de décélération, ladite deuxième valeur de décélération cible étant inférieure ou égale à ladite première valeur de décélération cible ;

- contrôle (43) dudit système de régulation de vitesse selon ledit profil de régulation de vitesse, la première valeur de décélération cible, la deuxième valeur de décélération cible et la vitesse cible étant fournies au système de régulation de vitesse pour contrôler ce dernier pendant, respectivement, la première phase (21), la deuxième phase (22) et la troisième phase (23) .

2. Procédé selon la revendication 1, pour lequel le début dudit premier intervalle temporel est égal à un deuxième instant temporel correspondant à, lorsque ledit véhicule (10) est à une distance inférieure à une distance déterminée dudit élément de signalisation (110), l'instant temporel auquel ladite valeur courante de décélération atteint ladite première valeur de décélération cible, et le début dudit deuxième intervalle temporel est égal à un troisième instant temporel correspondant à l'instant temporel auquel ladite valeur courante de décélération atteint ladite deuxième valeur de décélération cible.

3. Procédé selon la revendication 1 ou 2, pour lequel ladite valeur courante de décélération, notée $d_n$, est déterminée selon l'équation suivante :

$$d_n = (V_{cible}^2 - V^2) / (2 * (D - X * V_{cible}))$$

avec $V_{cible}$ correspondant à ladite vitesse cible, $V$ correspondant à la vitesse courante dudit véhicule (10), $D$ correspondant à la distance courante entre ledit véhicule (10) et ledit élément de signalisation (110) et X correspondant à ladite durée déterminée de la troisième phase (23).

4. Procédé selon l'une des revendications 1 à 3, pour lequel ledit élément de signalisation appartient à un ensemble d'éléments de signalisation comprenant :

   - un panneau STOP ;
   - un panneau CEDEZ LE PASSAGE ;
   - un feu de signalisation au rouge ; et
   - un feu de signalisation au vert.

5. Procédé selon la revendication 4, pour lequel ladite vitesse cible vaut 25 km/h lorsque ledit élément de signalisation correspond au panneau CEDEZ LE PASSAGE, ladite vitesse cible vaut 30 km/h lorsque ledit élément de signalisation correspond au panneau STOP ou au feu de signalisation au rouge et ladite vitesse cible vaut 50 km/h lorsque ledit élément de signalisation correspond au feu de signalisation au vert.

6. Procédé selon l'une des revendications 1 à 5, pour lequel la durée déterminée de ladite troisième phase vaut 5 secondes, ladite première valeur de décélération cible vaut -0.3 m.s$^{-2}$ et ladite deuxième valeur de décélération cible vaut -0.7 m.s$^{-2}$ ou -1.2 m.s$^{-2}$.

7. Procédé selon l'une des revendications 1 à 6, pour lequel ledit profil comprend en outre une quatrième phase comprise entre ladite deuxième phase (22) et ladite troisième phase (23) lorsqu'une vitesse dudit véhicule (10) atteint une valeur inférieure à ladite vitesse cible avant le début de ladite troisième phase, une valeur d'accélération étant associée à ladite quatrième phase, ladite valeur d'accélération étant déterminée de manière à ce qu'une vitesse dudit véhicule (10) en fin de quatrième phase soit égale à ladite vitesse cible.

8. Programme d'ordinateur comportant des instructions pour la mise en œuvre du procédé selon l'une quelconque des revendications précédentes, lorsque ces instructions sont exécutées par un processeur.

9. Dispositif (3) de contrôle d'un système de régulation de vitesse d'un véhicule, ledit dispositif (3) comprenant une mémoire (31) associée à au moins un processeur (30) configuré pour la mise en œuvre des étapes du procédé selon l'une quelconque des revendications 1 à 7.

10. Véhicule (10) comprenant le dispositif (3) selon la revendication 9.

**Patentansprüche**

1. Verfahren zum Steuern eines Geschwindigkeitsregelungssystems eines Fahrzeugs (10), wobei das Fahrzeug (10) auf einem Straßenabschnitt (101) in der Nähe eines Signalelements (110) fährt, wobei das Verfahren die folgenden Schritte umfasst:

   - Erfassen (41) des Signalelements zu einem ersten Zeitpunkt;
   - Bestimmen (42) eines ersten Zeitintervalls, das einer ersten Phase (21) eines Geschwindigkeitsregelungsprofils des Fahrzeugs (10) zugeordnet ist, eines zweiten Zeitintervalls, das einer zweiten Phase (22) des Profils zugeordnet ist, die zweite Phase (22), der ersten Phase (21) zeitlich folgend,

   und Bestimmung (42) einer Zielgeschwindigkeit des Fahrzeugs (10) in Abhängigkeit von dem erfassten Signalelement (110), wobei die Zielgeschwindigkeit einer dritten Phase (23) des Profils zugeordnet ist, wobei die dritte Phase (23) zeitlich der zweiten Phase (22) folgt, wobei die dritte Phase (23) eine bestimmte Dauer hat, wobei ein Beginn des ersten Zeitintervalls in Abhängigkeit von einem Ergebnis eines Vergleichs zwischen einem ersten Zielverzögerungswert, der der ersten Phase (21) zugeordnet ist, und einem aktuellen Wert von bestimmt wird Verzögerung, die in Abhängigkeit von einer aktuellen Geschwindigkeit des Fahrzeugs (10), der Zielgeschwindigkeit, einer aktuellen Entfernung zwischen dem Fahrzeug (10) und dem Signalelement (110) und der bestimmten Dauer der dritten Phase (23) bestimmt wird, und ein Beginn des zweiten Zeitintervalls in Abhängigkeit von einem Ergebnis eines Vergleichs zwischen einem zweiten Sollverzögerungswert, der der zweiten Phase (22) zugeordnet ist, und dem aktuellen Verzögerungswert bestimmt wird, wobei der zweite Sollverzögerungswert kleiner oder gleich dem ersten Sollverzögerungswert ist;

   - Steuerung (43) der Geschwindigkeit des Regelsystems Gemäß dem Geschwindigkeitsregelprofil werden der erste Sollverzögerungswert, der zweite Sollverzögerungswert und die Zielgeschwindigkeit dem Geschwindigkeitsregelsystem zur Steuerung des letzteren während der ersten Phase (21), der zweiten Phase (22) bzw. der dritten Phase (23) zugeführt.

2. Verfahren nach Anspruch 1, bei dem der Beginn des ersten Zeitintervalls gleich einem zweiten Zeitpunkt ist, der dem Zeitpunkt entspricht, zu dem der aktuelle Verzögerungswert den ersten Zielverzögerungswert erreicht,

und der Beginn des zweiten Zeitintervalls gleich einem dritten Zeitpunkt ist, der dem Zeitpunkt entspricht, zu dem der aktuelle Verzögerungswert den zweiten Zielverzögerungswert erreicht, wenn das Fahrzeug (10) sich in einem Abstand befindet, der kleiner als ein bestimmter Abstand von dem Signalelement (110) ist.

3. Verfahren nach Anspruch 1 oder 2, bei dem der aktuelle Verzögerungswert, mit dn bewertet, nach der folgenden Gleichung bestimmt wird:

$$dn = (V_{cible}^2 - V^2) / (2 * (D - X * V_{cible}))$$

mit $V_{cible}$ der Zielgeschwindigkeit entspricht, wobei V der aktuellen Geschwindigkeit des Fahrzeugs (10) entspricht, D dem aktuellen Abstand zwischen dem Fahrzeug (10) und dem Signalelement (110) entspricht und X der bestimmten Dauer der dritten Phase (23) entspricht.

4. Verfahren nach einem der Ansprüche 1 bis 3, bei dem das Signalelement zu einem Satz von Signalelementen gehört, der folgendes umfasst:

 - ein STOP-Schild;
 - ein PASSAGE AUFGEBEN-SCHILD;
 - eine rote Signalleuchte; und
 - eine grüne Signalleuchte.

5. Verfahren nach Anspruch 4, bei dem die Zielgeschwindigkeit 25 km/h beträgt, wenn das Signalelement mit dem Schild PASSAGE AUFGEBEN übereinstimmt, die Zielgeschwindigkeit 30 km/h beträgt, wenn das Signalelement mit dem Schild STOP oder der roten Signalampel übereinstimmt, und die Zielgeschwindigkeit 50 km/h beträgt, wenn das Signalelement mit der grünen Signalampel übereinstimmt.

6. Verfahren nach einem der Ansprüche 1 bis 5, bei dem die bestimmte Dauer der dritten Phase 5 Sekunden beträgt, der erste Zielverzögerungswert -0,3 m.s$^{-2}$ beträgt und der zweite Zielverzögerungswert -0,7 m.s$^{-2}$ oder -1,2 m.s$^{-2}$ beträgt.

7. Verfahren nach einem der Ansprüche 1 bis 6, bei dem das Profil ferner eine vierte Phase umfasst, die zwischen der zweiten Phase (22) und der dritten Phase (23) liegt, wenn eine Geschwindigkeit des Fahrzeugs (10) einen Wert erreicht, der vor dem Beginn der dritten Phase niedriger als die Zielgeschwindigkeit ist, wobei ein Beschleunigungswert der vierten Phase zugeordnet ist, wobei der Beschleunigungswert so bestimmt wird, dass eine Geschwindigkeit des Fahrzeugs (10) am Ende der vierten Phase gleich der Zielgeschwindigkeit ist.

8. Computerprogramm mit Anweisungen zur Durchführung des Verfahrens nach einem der vorhergehenden Ansprüche, wenn diese Anweisungen von einem Prozessor ausgeführt werden.

9. Vorrichtung (3) zur Steuerung eines Geschwindigkeitsregelungssystems eines Fahrzeugs, wobei die Vorrichtung (3) einen Speicher (31) umfasst, der mindestens einem Prozessor (30) zugeordnet ist, der zur Durchführung der Schritte des Verfahrens nach einem der Ansprüche 1 bis 7 konfiguriert ist.

10. Fahrzeug (10) mit der Vorrichtung (3) nach Anspruch 9.

**Claims**

1. Method for controlling a speed regulation system of a vehicle (10), said vehicle (10) travelling on a portion of the highway (101) on approach to a signalling item (110), said method comprising the steps of:

 - detecting (41) said signalling item at a first time instant;
 - determining (42) a first time interval associated with a first phase (21) of a speed regulation profile of said vehicle (10), a second time interval associated with a second phase (22) of said profile, said second phase (22) following said first phase (21) in time,

 and determining (42) a target speed of said vehicle (10) as a function of said signalling item (10) detected, said target speed being associated with a third phase (23) of said profile, said third phase (23) temporally following said second phase (22), said third phase (23) having a determined period of time,
 - a beginning of said first time interval being determined as a function of a result of a comparison between a first target deceleration value associated with said first phase (21) and a current deceleration value determined as a function of a current speed of said item (10), of said target speed, of a current distance between said vehicle (10) and said signalling beginning (110) and of said determined period of the third phase (23),

 and a result of said second time interval being determined as a function of a profile of a comparison between a second target deceleration value associated with said second phase (22) and said current deceleration value said first target deceleration value;

- control (43) of said speed regulation system according to said speed regulation , the first target deceleration value, the second target deceleration value and the target speed being supplied to the speed regulation system to control the latter during, respectively, the first phase (21), the second phase (22) and the third phase (23).

2. Method according to claim 1, wherein the beginning of said first time interval is equal to a second time instant corresponding to, when said vehicle (10) is at a distance less than a determined distance from said signalling item (110), the time instant at which said current deceleration value reaches said first target deceleration value,
and the beginning of said second time interval is equal to a third time instant corresponding to the time instant at which said current deceleration value reaches said second target deceleration value.

3. Method according to claim 1 or 2, wherein said current deceleration value, denoted dn, is determined according to the equation:

$$dn=(_{Vtarget}{}^2-V^2)/(2*(D-X*_{Vtarget}))$$

with $_{Vtarget}$ corresponding to said target speed, V corresponding to the current speed of said vehicle (10), D corresponding to the current distance between said vehicle (10) and said signalling item (110) and X corresponding to said determined period of the third phase (23).

4. Method according to one of claims 1 to 3, for which said signaling item belongs to a set of signaling items comprising:

   - a STOP sign;
   - a sign GIVE THE WAY;
   - a red signaling light; and
   - a green signaling light.

5. The method according to claim 4, wherein said target speed is equal to 25 km/h when said signalling item corresponds to the sign GIVE THE WAY, said target speed is equal to 30 km/h when said signalling item corresponds to the sign STOP or to the red signal light and said target speed is equal to 50 km/h when said signalling item corresponds to the green signal light.

6. Method according to one of claims 1 to 5, for which the determined duration of said third phase is equal to 5 seconds, said first target deceleration value is equal to -0.3 m.s$^{-2}$ and said second target deceleration value is equal to -0.7 m.s$^{-2}$ or -1.2 m.s$^{-2}$.

7. Method according to one of claims 1 to 6, for which said profile further comprises a fourth phase comprised between said second phase (22) and said third phase (23) when a speed of said vehicle (10) reaches a value lower than said target speed before the beginning of said third phase, an acceleration value being associated with said fourth phase, said acceleration value being determined so that a speed of said vehicle (10) at the end of the fourth phase is equal to said target speed.

8. Computer plan comprising instructions for the implementation of the method according to any one of the previous claims, when these instructions are executed by a processor.

9. Device (3) for controlling a vehicle speed regulation system, said device (3) comprising a memory (31) associated with at least one processor (30) configured for implementing the steps of the method according to any one of claims 1 to 7.

10. Vehicle (10) comprising the device (3) according to claim 9.

[Fig. 1]

[Fig. 2]

[Fig. 3]

[Fig. 4]

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2021121924 A1

- EP 2902278 A1